# EUROPEAN PATENT APPLICATION

(11) **EP 1 136 389 A2**
(43) Date of publication of application: **26.09.2001**
(21) Application number: 01201025.2
(22) Date of filing: 19.03.2001
(51) Int. Cl.: B65D 88/52

(54) **Folding box**

(30) Priority: 17.03.2000 GB 0006431
(71) Applicant: Flomotion Limited, Partridge Green, West Sussex RH13 8RA (GB)
(72) Inventor: Owen, Donal Rae Sydney, Horsham West Sussex RH12 ING (GB); Cox, Gary Francis, Surrey GU20 6QD (GB)
(74) Representative: Lock, Graham James

(57) **Abstract**

A reusable bulk container comprises a base and four sides, at least some of the sides being hinged to the base via spigots extending from an edge of the side and projecting into slots formed on an adjacent upright part of the base. A prefered embodiment provides a reusable bulk container having a base, four sides and a lid wherein the lid comprises two sections, a first section hinged to a first side of the container and a second section being hinged to a second side of the container opposing the first side; a third side having an aperture through which an outlet for the container can project, the third side having an upper portion hinged to the remainder of the side.

## Description

The present invention relates to reusable bulk containers.

Within the context of this specification the word "comprises" is interpreted to mean "includes, among other things". It is not interpreted to mean "consists of only".

Containers of this type are well known and consist of a collapsible framework which supports a plastics liner containing the commodity to be transported. An example is shown in our earlier patent application published as GB2242891A. It used to be that the side walls (or "gates") of the containers would be removable, as shown in these applications, and would be stacked on the base for the return journey or for storage. However, there have recently been developed boxes where the gates are hinged to the base and fold down to a collapsed state.

In general, folding boxes such as these are insufficiently robust for long term use or use in relation to hazardous materials. Other designs are unable to fold into as small a size as demountable boxes. Further, new liners have been developed which have a valve outlet instead of a rupturable membrane, and these have a significantly larger depth in the outlet which is difficult to accommodate in a folding box.

The present invention proposes a number of ways in which the above problems can be addressed.

In its first aspect, the present invention provides a reusable bulk container comprising a base and four sides, at least some of the sides being hinged to the base via spigots extending from an edge of the side and projecting into slots formed on an adjacent upright part of the base.

This enables a side to fold down and also rise to lie over previously folded sides already resting on the base. In theory, a first side could fold to lie directly on the base and hence could be attached via a simple hinge, the other sides being able to rise whilst being folded. However, it is preferred that all four sides are attached to the base in this fashion.

If the spigots are provided by fixing bolts in the structure of the side such that the shaft of the bolts project through and into the slots, then the spigots will be easily removable to allow the box to be dismantled. This enables the folding box of the present invention to be repaired and cleaned as easily as a conventional box.

It is obviously undesirable that the sides should be able to rise when the box is erect. Accordingly, it is preferred that the sides have apertures that engage with an inwardly projecting lug when they are brought to their upright position. Alternatively, the sides have outwardly projecting lugs which engage with an aperture. The lug can be a pin which thus engages with a hole in the side or alternatively in a flange fixed to the base. When upright, the sides are thus unable to rise and are held firm by the spigot and the pin. As the side is folded, it moves away from the inwardly directed pin and becomes free to rise over the previously folded sides. Alternatively, an outwardly directed pin connected to the side moves away from its corresponding aperture and becomes free to rise over the previously folded sides.

In its second aspect, the present invention relates to a reusable bulk container with a base and four sides, each able to fold down onto the base, one side having an aperture through which an outlet of a liner for the container can project, that side being thicker in the vicinity of that aperture, the thicker region extending from the edge of the side adjacent the base for a thickened height, the length of the base from the one side to an opposite side being greater than the height of the opposite side by an amount greater than the thickened height.

Thus, the opposite side can be folded first and the thickened height accommodated in the depth of the opposite side. Accordingly, valved outlet liners can be employed with a folding box.

Liners with valved outlets must be fitted into the container before filling, with the valve being located in the apertured side. This requires the operator to reach into the container, which presents difficulty as the standard 1000 litre container has sides of approximately 1 metre. The arm reach of most operators is insufficent to allow this.

Containers are known in which half of one side can be folded down to allow easier access to the interior. This has previously been used to allow discrete items to be stacked within the container. However, the mechanical strength of the container is inevitably impaired by this and accordingly such containers are used only for dry products. The higher density of liquid products means that the load on such a folding side would be too great.

Accordingly, in its third aspect, the present invention proposes a reusable bulk container with a base and four sides, one side having an aperture through which an outlet of a liner for the container can project, and a side adjacent the one side having an upper portion hinged to the remainder of the side, the upper portion occupying between about 10% and about 40% of the height of the side. Alternatively, the one side has an upper portion hinged to th eremainder fo the side, the upper portion preferably occupying between about 10% and about 40% of the height of the side.

This reduction in the proportion of the side wall occupied by the hinged part is still sufficient to allow access, but leaves sufficient strength in the side to contain liquid products. The hinged part only needs to support that part of the product which is above it, so as the proportion decreases so does the strength problem.

A particularly preferred range is between about 20% and about 40% as this allows access by a wider variety of operators. In the embodiment, the upper portion occupies 1/3 of the height of the side.

A further preferred arrangement is one in which the one side or an adjacent side is a framework of struts supporting panels, including a first horizontal strut to which the upper portion is hinged and a second horizontal strut below the first spaced from the lower edge of the side by between 20 and 40% of the height of the side. This offers a very good combination of strength with access.

A preferable embodiment of the invention provides a re-usable bulk container having a base, four sides and a lid wherein the lid comprises two sections, a first section hinged to a first side of the container and a second section being hinged to a second side of the container opposing the first side; a third side having an aperture through which an outlet for the container can project, the third side having an upper portion hinged to the remainder of the side.

Preferably the aperture is positioned in the third side of the container adjacent the base of the container.

Preferably, an embodiment of the container comprises an aperture having a sliding hatch. Advantageously, the hatch is capable of sliding in a channel across the aperture to cover and protect it. Alternatively, the hatch can be moved aside the aperture to allow access to the inside of the container. In a preferred embodiment the hatch comprises a projection defining an opening and a locking pin adjacent the aperture may be received by this opening. Advantageously, the locking pin and opening allow the hatch to be secured in position across the aperture thereby protecting the aperture.

Preferably, sections of the lid adjoin the first and second sides via a double hinge, more preferably, at least two double hinges are positioned between each section of the lid and the respective sides of the container.

Preferably the lid has a closure means. Preferably, the closure means comprises an arm adjoining a first section of the lid and a receiver adjoining a second section of the lid which receives the arm. Preferably the arm has a hook adjacent its end. Preferably the receiver comprises a threaded stem adjoining a loop which is complementary with the hook and a lever adjoining the stem which is pivoted at one end. This provides the advantage that when the lever lies parallel with the surface of the lid it pulls the loop into the hook. In contrast, when the lever is perpendicular to the surface of the lid the loop is pushed out of the hook. Preferably, the threaded stem allows tension of the closure means to be adjusted by turning the stem and thereby adjusting its free length. Preferably a post havign a hole through it is positioned on the lid adjacent the lever which provides the advantage that when the lever is parallel with the surface of the lid the post extends through the lever and a lock can be secured through the hole thereby locking the lever in place.

Preferably, the upper portion of the third side occupies between about 10 and about 40% of the height of the side. This provides the advantage of facilitating access to the inside of the container, for example for access to the inside of the aperture.

Preferably the base comprises a pallet construction which provides the advantage of facilitating transportation of the container.

Preferably, the inner of the base comprises a removable tray, which is preferably interchangeable. Preferably, the tray comprises a base and at least one side defining an opening which lines up with the aperture in the third side of the container. Preferably the base of the tray is tilted downwardly towards the opening to encourage the contents of the container to flow through the opening and out of the aperture. More preferably the corners of the base of the tray adjacent the opening are raised to funnel contents of the container through the opening. Preferably the corners are raised by folding the base of the tray along lines which extend from adjacent the opening to mid way along each side of the tray adjacent the side adjoining the opening. In an alternative embodiment the tray is flat and lies in a single plane.

Preferably, the container is manufactured from a framework of square section bars to which are fixed one or more panels. The panels cover gaps in the framework and the bars provide mechanical strength. Preferably, the bars are produced of stainless steel or mild steel. Preferably the panels are produced of polypropylene. This provides the advantage of a strong, but light weight structure.

Preferably, each side comprises a handle located between adjoining bars. This facilitates collapsing (folding) and constructing of the container. Preferably each handle is separated from the panels which allows it to be held easily. In contrast the bars abut the panels.

Preferably, hooks extend from the edges of the first and second sides of the container for gripping and securing the third and fourth sides when the container is in an unfolded or uncollapsed configuration. Preferably the hooks extend from at least adjacent the top of the first and second sides of the container. More preferably hooks also extend from the first and second sides of the container between the top of each side and the base. Thus, in a preferred embodiment at least two hooks extend from each side edge of the first and second sides of a container. However, it will be apparent that alternatively, the hooks could extend from the third and/or fourth sides of the container for gripping and securing the first and/or second sides when the container is in an unfolded/uncollapsed configuration.

An example of the present invention will now be described with reference to and/or as illustrated in the accompanying figures, in which;
Figure 1 is a perspective view from one side of a container according to the present invention;
Figure 2 is a perspective view corresponding to figure 1 but with the lid removed;
Figure 3 is a perspective view corresponding to figure 2 with a first side folded down;
Figure 4 is a perspective view from the opposite direction as figure 3, with two sides folded down;
Figure 5 is a perspective view corresponding to figure 4, with three sides folded down;
Figure 6 is a perspective view corresponding to figure 5, with all four sides folded down;
Figure 7 is a perspective view corresponding to figure 6, with the lid stowed;
Figures 8, 9 and 10 are enlarged illustrations of the hinges retaining the sides to the base, figure 8 being a view from a side, figure 9 being a horizontal section on IX-IX of figure 8, and figure 10 being a vertical section on X-X of figure 8;
Figure 11 is a cross section through the container when folded; and
Figure 12 is a front view of the hinged access side.

For the purpose of clarity and a concise description features are described herein as part of the same or separate embodiments, however it will be appreciated that the scope of the invention may include embodiments having combinations of all or some of the features described.

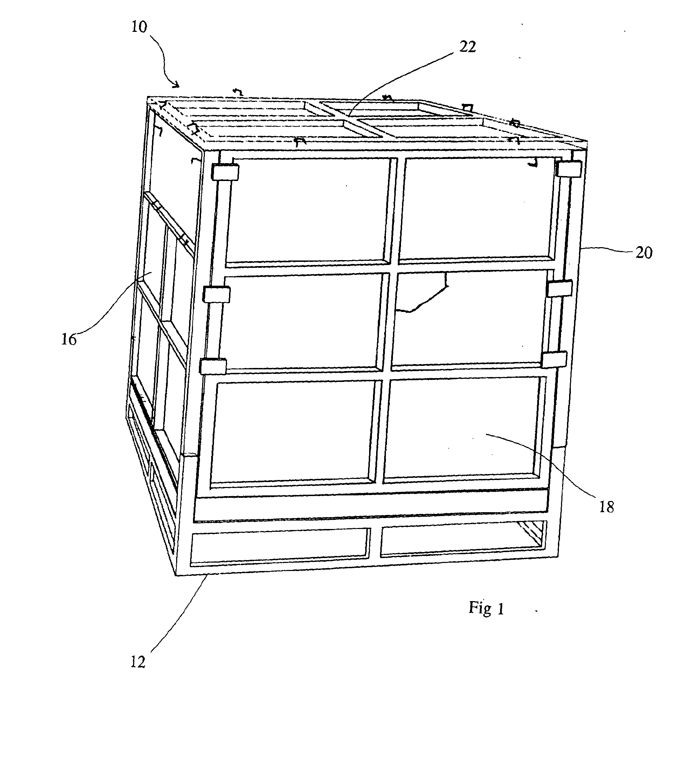

Referring to figure 1, the reusable container 10 comprises a base 12, a apertured side 14 (not visible in figure 1), an access side 16 adjacent the apertured side 14, a rear side 18 opposite the apertured side 14 and adjacent the access side 16, and a fourth side 20. A lid 22 overlies all four sides. In use, a plastics liner is placed within the reusable container 10 and its valve located in the aperture 24 of the apertured side 14. The liner is then filled with the fluid material to be transported and it expands to fill the reusable container 10, being supported thereafter by the structure of the container.

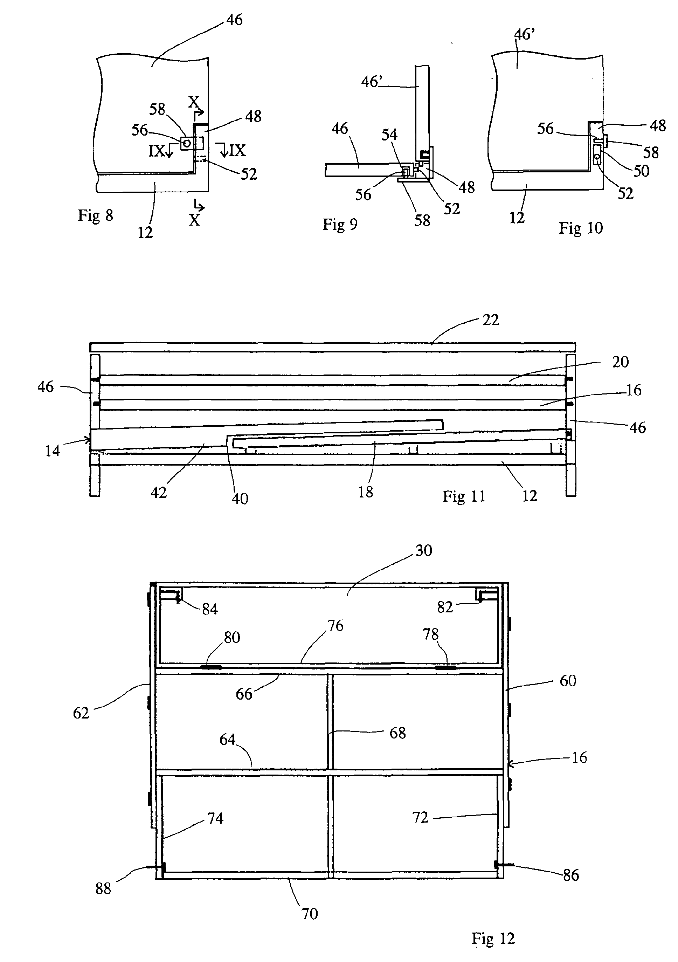

After the journey is complete, a sliding door 26 is withdrawn to reveal the aperture 24 and hence the valve of the liner. A conduit is attached to the liner and the valve opened. The contents of the liner can then be withdrawn, and the liner removed from the reusable container 10. It is then necessary to collapse the reusable container 10 so that it can be packed more economically for the return trip. Previously, the reusable container 10 would be dismantled and the constituent parts stacked on the base 12. According to the invention, the example shown is able to fold neatly without substantial dismantling into substantially the same volume as a dismantled box. Figures 1 to 7 show the progressive stages of this folding, and figures 8 to 12 show details of the construction which permits this.

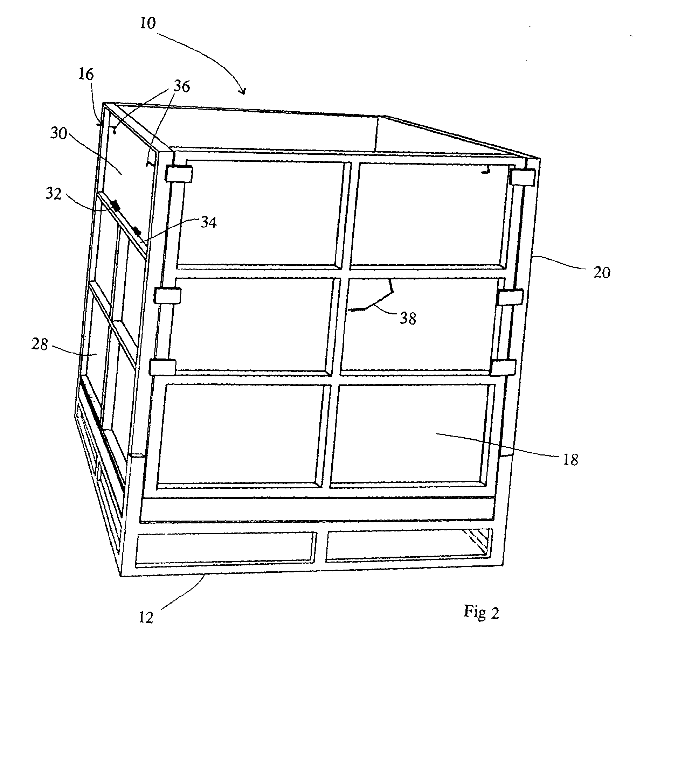

Figure 1 shows the reusable container 10 in its full transit state, with the lid 22 in place. Figure 2 shows the reusable container 10 ready to be filled, or after removal of the contents. If the reusable container 10 is to be filled from this state then a liner is placed in the interior via the now open top and the valve of the liner located in the aperture 24. To assist this, the access side 16 comprises a main part 28 which attaches to the base 12 and a hinged access panel 30 connected to the main part 28 via hinges 32 attached to a horizontal strut 34 at approximately 1/3 of the height of the access side 16. Bolts 36 hold the access panel 30 to the main part 28. When they are withdrawn, the access panel 30 can be hinged outwardly and down to lie alongside the outside of the main part 28, effectively reducing the height of that side and permitting easier access to t he aperture 24 located at the lower edge of the apertured side 14.

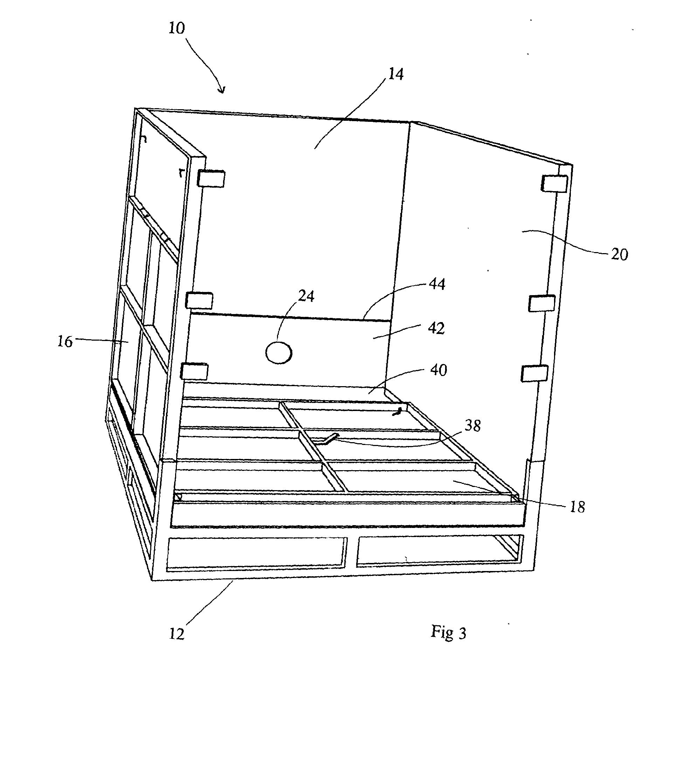

To fold the reusable container 10 down, a handle 38 on the rear side 18 is grasped and that side lowered toward the base 12. This is permitted by the hinge mechanism at the lower edge of the rear side 18 (and indeed all sides), to be described in more detail later. This leaves the reusable container 10 in the state shown in figure 3, where the apertured side 14 is visible.

It will be apparent from figure 3 (and later) that the length of the base 12 between the apertured side 14 and the rear side 18 is greater than the height of the rear side 18. Thus, there is a gap 40 between the top of the folded rear side 18 and the apertured side 14.

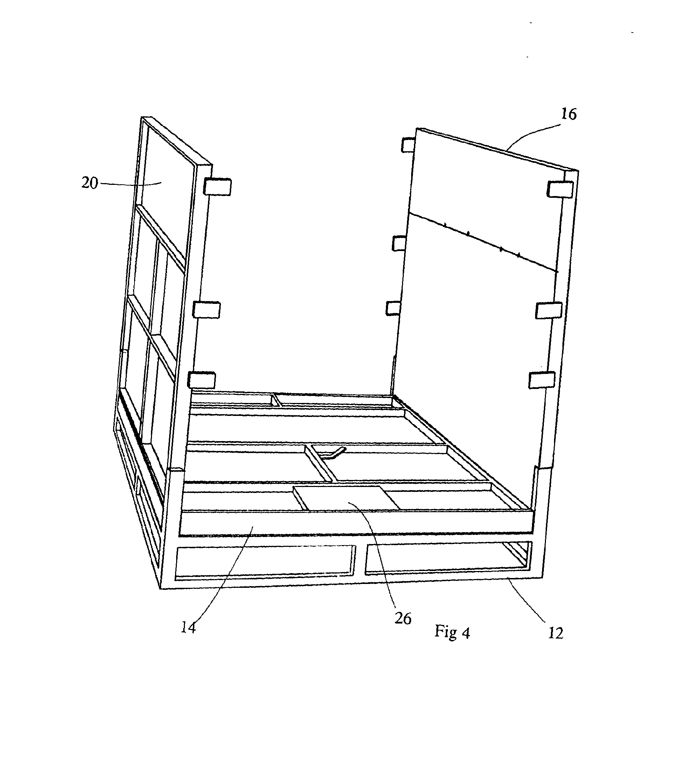

At the level of the aperture 24, the apertured side 14 is thickened to provide sufficient depth to accommodate the valve of a valved liner. This thickened region 42 extends across the width of the apertured side 14 and from the lower edge thereof to a height above the aperture 24. It ends at a step 44 where the thickness of the apertured side 14 reduces. The height of the thickened region 42 is less than the size of the gap 40, and accordingly when the apertured side 14 is folded down via hinges at its lower edge the thickened region 42 lies in the gap 40 and the apertured side can lie neatly and compactly on the rear side 18. When folded in this way, the reusable container 10 is in the state shown in figure 4.

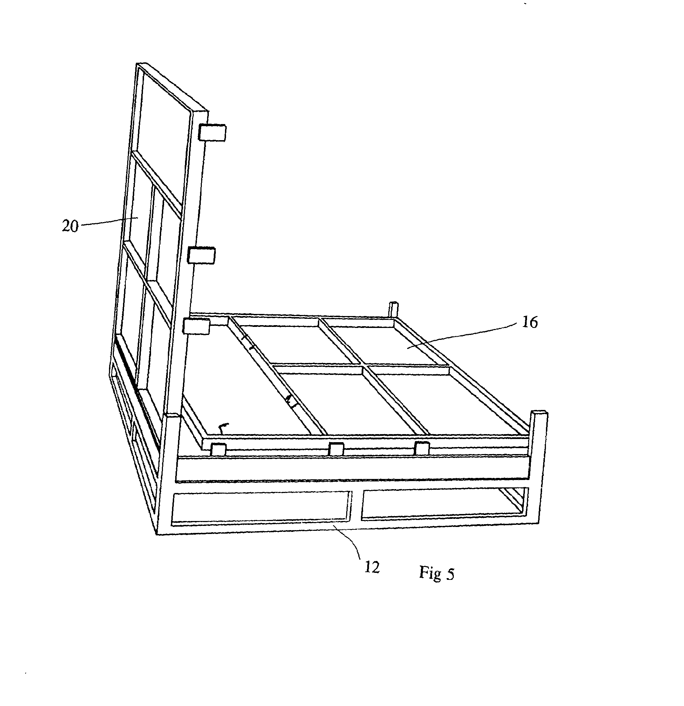

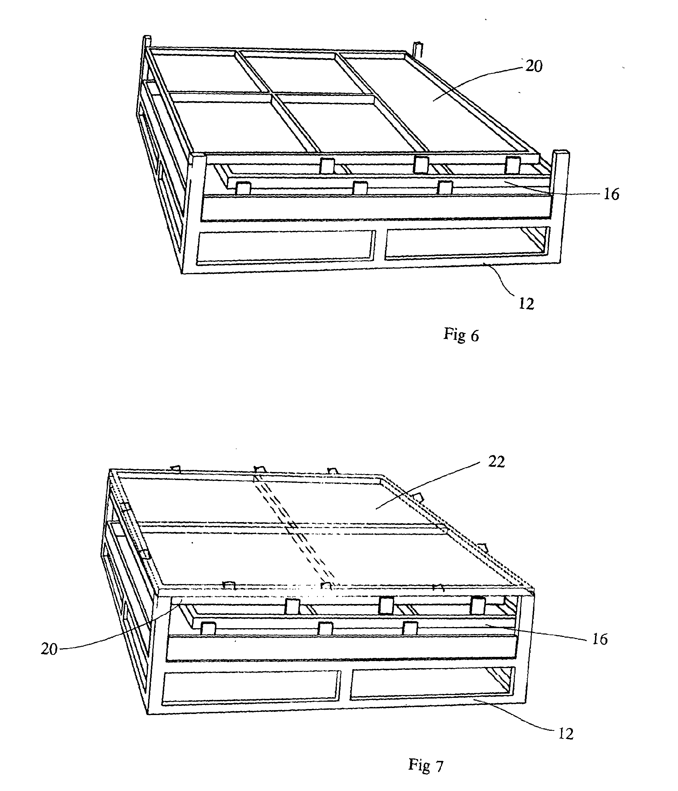

From this state, the access side 16 can be folded, to figure 5, and the fourth side 20 folded, to figure 6. The lid 22 can then be placed on the folded box and located via lugs, figure 7. The collapsed reusable container 10 can then be transported.

Figures 8-10 show the hinges employed in this example. Each side 46 has two such hinges, one at either lower corner. At each of its corners, the base 12 has vertical riser struts 48. Each riser strut has a vertical slot 50 on those edges which face a side 46 or 46'. The side 46 has a spigot 52 which extends from its edge into the slot 50. The spigot 52 is circular in cross section and accordingly the side 46 can rotate about the spigot 52 and thus hinge about a line approximate to its lower edge. The spigot 52 can also slide in the slot 50 so that when the side 46 has been folded it can rise vertically to accommodate beneath it any other sides 46' that have already been folded.

To prevent the side 46 from sliding vertically when the reusable container 10 is erect, locking apertures 54 are provided on the side 46 which engage horizontal locking pins 56 directed inwardly relative to the side 46. Each locking pin 56 is attached to a flange 58 which extends from the riser strut 48. When the side 46 is upright, the locking pins 56 extend into the locking apertures 54 and prevent upward movement of the side 46. As the side is folded down, it moves away from the locking pin 56 and the flange 58 and accordingly the locking pin 56 no longer extends into the locking aperture, allowing the side 46 to rise vertically.

In an alternative embodiment, in order to prevent side 46 from sliding vertically when the reusable container 10 is erect, locking pins are provided on the side 46 which engage locking apertures positioned on flanges which extend from riser strut 48. When the side 46 is upright, the locking pins extend into the locking apertures and prevent upward movement of the side 46. As the side 46 is folded down, the locking pin moves out of the locking aperture and the flange 58, and accordingly the locking pin no longer extends into the locking aperture, allowing the side 46 to rise vertically.

Figure 11 shows a cross section through the folded reusable container 10 . It can be seen that the sides 14, 16, 18, 20 and the lid 22 lie over the base 12 in a vertical array. The thickened region 42 lies in the gap 40 adjacent the top edge of the rear side 18 allowing both to fold down compactly whilst accommodating the valve of the liner.

Figure 12 shows the access side 16 in more detail. As described in our earlier application GB2242891A, the sides are constructed of a framework of square section bars to which is fixed one or more panels. The panels cover the gaps in the framework and the bars provide mechanical strength. The framework of the access side 16 comprises a pair of outer vertical struts 60, 62 on the two vertical edges. Horizontal bracing struts 64, 66 span between the vertical struts 60, 62 at 1/3 and 2/3 of the height of the side respectively. A middle vertical strut 68 extends from the upper horizontal brace 66 to the lower edge of the side 16, at which is located a lower horizontal strut 70. Hinge struts 72, 74 carry the hinge mechanism shown in figures 8-10 described above and extend vertically from the lower horizontal strut 70 to alongside the outer vertical struts 60, 62. These stop short of the lower edge of the side 16 to accommodate the riser struts 48 of the base 12.

Within the space defined by the outer vertical struts 60, 62 on either side and the upper horizontal brace 66 on the lower edge is the access panel 30. This is formed of a rectangular pattern 76 of struts carrying a single panel. The access panel 30 is hinged to the upper horizontal brace 66 via conventional hinges 78, 80. A pair of latches 82,84 can lock the rectangular pattern 76 to the outer vertical struts 60, 62 respectively, holding the access panel 30 in place.

At the lower edge of the access side 16, threaded bolts 86,88 pass through the hinge struts 72, 74 respectively in the plane of the side 16. The heads of the bolts are tightened against the inner faces of the struts 72, 74 and the threaded ends extend outwardly to form the spigots 52. If necessary, the bolts 86, 88 can be unscrewed from the struts 72, 74, thereby releasing the side 16 and allowing it to be cleaned, repaired or replaced. This arrangement is provided on each of the sides 14,16, 18, 20.

Other interconnections between the sides 14, 16, 18, 20 and the lid 22 are conventional and further details may be found in the art, including our earlier application GB2242891A.

It will be apparent to the skilled person that many variations can be made to the above described embodiment without departing from the scope of the present invention.

## Claims

1. A reusable bulk container comprising a base and four sides, at least some of the sides being hinged to the base via spigots extending from an edge of the side and projecting into slots formed on an adjacent upright part of the base.

2. A reusable bulk container according to claim 1 wherein the spigots are provided by fixing bolts in the structure of the side such that the shaft of the bolts project through and into the slots, the spigots being easily removable to allow the box to be dismantled.

3. A reusable bulk container according to claim 1 or 2 wherein the sides have apertures that engage with an inwardly projecting lug when they are brought to their upright position or the sides have outwardly projecting lugs which engage with apertures in flanges fixed to the base.

4. A reusable bulk container with a base and four sides, each able to fold down onto the base, one side having an aperture through which an outlet of a liner for the container can project, that side being thicker in the vicinity of that aperture, the thicker region extending from the edge of the side adjacent the base for a thickened height, the length of the base from the one side to an opposite side being greater than the height of the opposite side by an amount greater than the thickened height.

5. A reusable bulk container with a base and four sides, one side having an aperture through which an outlet of a liner for the container can project, wherein a side adjacent the one side has an upper portion hinged to the remainder of the side; or wherein the one side has an upper portion hinged to the remainder of the side.

6. A reusable bulk container according to any preceding claim having a base, four sides and a lid wherein the lid comprises two sections, a first section hinged to a first side of the container and a second section being hinged to a second side of the container opposing the first side; a third side having an aperture through which an outlet for the container can project, the third side having an upper portion hinged to the remainder of the side.

7. A reusable bulk container according to claim 6 wherein the aperture is positioned in the third side of the container adjacent the base of the container.

8. A reusable bulk container according to claim 6 or 7 wherein sections of the lid adjoin the first and second sides via a double hinge.

9. A reusable bulk container according to any one of claims 7 to 11 wherein the lid has a closure means which comprises an arm adjoining a first section of the lid and a receiver adjoining a second section of the lid which receives the arm.

10. A reusable bulk container according to any preceding claim wherein the base comprises a pallet construction for facilitating transportation of the container.

11. A reusable bulk container according to any preceding claim wherein the inner of the base comprises a removable or interchangeable tray which comprises a base and at least one side defining an opening which lines up with an aperture in a side of the container.
